# EUROPÄISCHE PATENTSCHRIFT

(11) **EP 3 685 068 B1**
(45) Veröffentlichungstag und Bekanntmachung des Hinweises auf die Patenterteilung: **25.01.2023**
(21) Anmeldenummer: 17771663.6
(22) Anmeldetag: 21.09.2017
(51) Int. Cl.: F16D 65/56

(54) **SCHLINGFEDER UND SCHLINGFEDERANORDNUNG**
WRAP SPRING AND WRAP SPRING ASSEMBLY
RESSORT ENROULÉ ET ENSEMBLE RESSORT ENROULÉ

(43) Veröffentlichungstag der Anmeldung: 29.07.2020
(73) Patentinhaber: ZF CV Systems Europe BV, 1170 Brussels (BE)
(72) Erfinder: GROSSKOPF, Ralf, 74931 Lobach (DE); KLOOS, Eugen, 68519 Viernheim (DE)
(74) Vertreter: Copi, Joachim
(86) Internationale Anmeldenummer: PCT/EP2017/001121
(87) Internationale Veröffentlichungsnummer: WO 2019/057264

(56) Entgegenhaltungen:
- EP-A1- 0 614 025
- DE-A1-102014 017 438
- Anonymous: "Porsche 911/914 Pedal Cluster Rebuild | 1965-1989 | Pelican Parts DIY Maitenance Article", , 1. September 2009 (2009-09-01), XP055484072, Gefunden im Internet: URL:https://www.pelicanparts.com/techartic les/Mult_pedal_cluster/Mult_pedal_cluster. htm [gefunden am 2018-06-13]
- Anonymous: "90142353100 - URO Parts - Porsche Brake Pedal Return Spring - Free Shipping Available", , 1. September 2009 (2009-09-01), XP055484056, Gefunden im Internet: URL:https://www.eeuroparts.com/Parts/18859 7/Brake-Pedal-Return-Spring-APA90142353100 / [gefunden am 2018-06-13]

## Beschreibung

Die Erfindung betrifft eine Schlingfeder zum Sperren einer unerwünschten Drehbewegung eines Drehelements. Ferner betrifft die Erfindung eine Nachstellvorrichtung, zum Nachstellen des Verschleißes von Bremsbelägen einer Scheibenbremse. Eine Nachstellvorrichtung umfasst eine Führungshülse, in der eine Schlingfeder angeordnet ist, einen Nutring, der die Führungshülse umgreift, wobei der Nutring über eine Torsionsfeder mit einer Verschlusskappe gekoppelt ist und einem, den Nutring, umgreifenden Öffnungsring. Darüber hinaus betrifft die Erfindung eine Scheibenbremse für ein Fahrzeug, insbesondere für ein Nutzfahrzeug, wobei die Scheibenbremse eine Nachstellvorrichtung mit Schlingfeder aufweist.

Zuspanneinrichtungen mit einer Nachstellvorrichtung, zum Nachstellen des Lüftspiels zwischen dem Bremsbelag und der Bremsscheibe, sind hinlänglich bekannt. Generell sind derartige Scheibenbremsen in der Regel pneumatisch oder elektromechanisch betätigbar.

Im Nutzfahrzeugbereich gibt es beispielsweise mechanische Nachstellvorrichtungen für Nutzfahrzeugscheibenbremsen. Die Zuspanneinrichtungen haben bei Scheibenbremsen die Aufgabe, ein gleichmäßiges Lüftspiel in allen Fahrsituationen oder Bremssituationen bereit zu stellen, was wiederum eine sehr hohe Präzision in der Nachstellung erfordert. Im Falle einer Bremsbetätigung muss das vorhandene Lüftspiel, bis zur Anlage des Bremsbelags an der Bremsscheibe, mittels der Zuspanneinrichtung überwunden werden. Das Lüftspiel ist beispielsweise ausschlaggebend für den Schwenkbereich eines zur Zuspannung dienenden Drehhebels und somit die maximal aufzubringende Bremskraft bzw. die Bremskraftreserve. Tritt im Falle einer Bremsung des Fahrzeugs eine Abweichung des Lüftspiels vom Soll-Wert auf, wird die Nachstellvorrichung betätigt. Mit anderen Worten werden im Falle einer Abweichung vom Soll-Wert, d.h. einer Vergrößerung des Lüftspiels aufgrund eines Verschleißes der Bremsbeläge und/oder der Bremsscheibe, die Bremsbeläge selbstständig mittels der Nachstellvorrichung verstellt. Die Verstellung kann beispielsweise durch eine Verstellbewegung von Druckstempeln erfolgen.

Schlingfedern wiederum werden häufig als Kupplungen oder Freilaufkupplungen eingesetzt. Im Nutzfahrzeugbereich werden Schlingfedern, insbesondere bei Scheibenbremsen, in Nachstelleinrichtungen eingesetzt. Schlingfederkupplungen bestehen nach der DE 10 2014 218 233 A1 aus einer, auf einer Welle oder einen zylindrischen Körper gewickelte Schraubenfeder, die einseitig am Antrieb befestigt ist. Durch ein Zusammenführen, beziehungsweise Auseinanderrücken der Enden der Schraubenfeder kann der Reibungswiderstand zwischen der Schraubenfeder und der Welle, beziehungsweise dem zylindrischen Körper eingestellt werden.

Aus der DE 10 2014 017 430 A1 geht eine Verschleiß-Nachstellvorrichtung für eine Scheibenbremse hervor, bei der die Nachstellvorrichtung eine Schlingfeder aufweist, die zumindest bei einem Verdrehen in einer der ersten Drehrichtung entgegengesetzten zweiten Drehrichtung mit dem Außengewinde der Stellspindel kämmt und das Nachstellgetriebe bezüglich der Stellspindel verschraubt.

Auch die EP 3 051 170 A1 zeigt eine Nachstellvorrichtung für eine Scheibenbremse mit einer rechteckig geformten Schlingfeder, wobei die Schlingfeder um einen äußeren Kolben angeordnet ist und ein Ende der Schlingfeder mit einem Antriebsring verbunden ist, wodurch die Schlingfeder als Einweg/-Freilaufkupplung wirkt.

Bei der DE 10 2014 101 341 A1 ist die Übertragungseinrichtung einer Nachstellvorrichtung als wendelförmige Schlingfeder ausgebildet, bei der sich die Nachstellvorrichtung längs eines ersten Wendelabschnitts radial gegenüber dem Antriebselement und längs eines zweiten Wendelabschnitts radial gegenüber dem Nachstellelement abstützt. Die eine Radialabstützung befindet sich an der Innenseite der Schlingfeder und die zweite Radialabstützung befindet sich an der Außenseite der Schlingfeder.

Aus der DE102014019111 A1 geht eine Nachstelleinrichtung mit einer Schlingfeder hervor, bei der die Schlingfeder gegenüber der Stellspindel und/oder dem Mutterteil verdrehfest oder drehgehemmt gehalten wird. Die Schlingfeder liegt umfänglich an der Stellspindel und/oder dem Mutterteil an und besteht aus einer mehrfach gewundenen Drahtfeder.

Eine andere Nachstellvorrichtung geht beispielsweise aus der DE10 2014017438 A1 hervor. Dabei weist die Nachstellvorrichtung eine Schlingfeder mit einem abstehenden Federende auf, das in eine Halteöffnung der Führungshülse eingreift oder eine Mitnahmeflanke der Führungshülse in Umfangsrichtung schlingförmig umgreift. Die Schlingfeder ist somit axial fest positioniert. Zwischen der Führungshülse und dem abstehenden Federende der Schlingfeder ist in Umfangsrichtung ein Abstand bzw. eine Lücke vorhanden, welche bei einer Verschleißnachstellung der Bremsbeläge nicht kompensiert werden kann.

Aus der Nichtpatentliteratur URO Parts - Porsche Brake Pedal Return Spring - Free Shipping Available" vom 13. Juni 2018 (2018-06-13), XP055484056, geht weiterhin eine Schlingfeder mit einer U-förmigen Erhebung für ein Bremspedal hervor. Die Schlingfeder ist u.a. dazu eingerichtet die Spannung des Kupplungspedals und des Bremspedals in einem Porsche 911 von 1965-1998 aufrecht zu halten.

Weiterhin offenbart auch die als Nichtpatentliteratur aufgeführte Bedienungsanleitung Porsche 911/914 Pedal Cluster Rebuild (1965_1998) von Pelican Parts eine Pedalanordnung mit einer eine U-förmige Erhebung aufweisende Schlingfeder.

Eine Anwendung der Schlingfeder mit einer U-förmigen Erhebung zum Sperren einer unerwünschten Drehbewegung eines Drehelements in einer Nachstelleinheit einer Bremse, insbesondere einer Scheibenbremse ist aus dem Stand der Technik nicht bekannt.

Die Erfindung liegt der Aufgabe zugrunde, die Nachteile aus dem Stand der Technik zu überwinden und eine Anordnung der Schlingfeder an einer Nachstelleinrichtung für eine Scheibenbremse bereitzustellen, die einen vorzeitigen Ermüdungsbruch unterbindet, sowie eine akzeptable Streuung des Schaltwinkels bzw. des Totwinkels, d.h. der Schaltzustand der Nachstelleinrichtung, bis die Schlingfeder sich im Schlupf befindet und einer damit verbundenen akzeptablen Streuung des Lüftspiels einer Scheibenbremse gewährleistet.

In einer Weiterführung weist die Schlingfeder mindestens eine U-förmige Erhebung auf.

Die U-förmige Erhebung der Schlingfeder dient, im eingebauten Zustand in der Nachstellvorrichtung, als zusätzliche radiale Abstützung, wodurch die Belastung auf die Schlingfeder deutlich reduziert wird. Sogenannte Ermüdungsbrüche werden an der Schlingfeder unterbunden oder wenigstens minimiert. Als Ermüdungsbruch ist die Überlastung des Materials zu verstehen, welches bei einer zu großen Spannung in dem Material oder bei einem zu großen Druck auf das Material entsteht.

In einer weiteren vorteilhaften Ausgestaltung ist die U-förmige Erhebung aus mindestens einer Schlingfederwindung zwischen einem ersten Schlingfederende und einem zweiten Schlingfederende ausgebildet. Damit ist die Schlingfeder deutlich biegesteifer gegenüber einer Ausgestaltung der U-förmigen Erhebung an dem ersten Schlingfederende oder dem zweiten Schlingfederende. Zudem ist ein Aufbiegen der U-förmigen Erhebung nicht möglich oder zumindest deutlich schwerer, wodurch erhöhte Schaltwinkel verhindert werden. Ein vorzeitiger Ausfall der Nachstellvorrichtung wird somit unterbunden.

Weiterhin weist Schlingfeder zwischen der U-förmigen Erhebung und dem ersten Schlingfederende, in Umfangsrichtung der Schlingfeder, einen Winkel α auf.

Darüber hinaus wird die Schlingfeder zwischen der U-förmigen Erhebung und dem ersten Schlingfederende, in Umfangsrichtung der Schlingfeder, in einem Winkel α um 90 Grad weitergeführt.

Eine Weiterführung des belasteten ersten Schlingfederendes halbieren die Schaltwinkel. Insbesondere verhindert die Weiterführung der Schlingfeder in dem Winkel α ein Abheben des eingespannten Endes in der Nachstellvorrichtung, während des Rückhubs der Nachstellvorrichtung.

In einer weiteren vorteilhaften Ausgestaltung weist die Schlingfeder einen kreisförmigen Querschnitt oder einen trapezförmigen Querschnitt auf. Gegenüber den ursprünglichen Formen, bei dem die Schlingfeder aus einem rechteckigen Draht gefertigt ist und auf eine zylindrische Mantelfläche aufgezogen ist, läuft die Schlingfeder mit einem kreisförmigen Querschnitt in einem Gewinde der Stellspindel. Durch die Verwendung eines trapezförmigen Querschnitts, anstelle eines kreisförmigen Querschnitts der Schlingfeder, lässt sich das Ermüdungsverhalten des Drahtes, aus dem die Schlingfeder gefertigt ist, nochmals verbessern. Nachteilig an einem trapezförmigen Querschnitt ist allerdings, dass sich die Steifigkeit der Schlingfeder und damit die Toleranzempfindlichkeit erhöht.

Die Aufgabe wird dadurch gelöst, dass die Schlingfeder mit der U-förmigen Erhebung an einer Sicke des Zwischenrings angeordnet ist. Die Anordnung der Schlingfeder an der Sicke des Zwischenrings verhindert ein Spiel der Schlingfeder zwischen der Führungshülse und dem Zwischenring. Die Schlingfeder ist zumindest in der Ausgangsstellung der Nachstellvorrichtung spielfrei eingespannt.

Darüber hinaus ist die Schlingfeder vorteilhaft in dem Gewinde der Stellspindel angeordnet. Dadurch erhöht sich die Genauigkeit des Nachstellvorgangs und Bauteile, wie z.B. die Mantelfläche, auf den die Stellspindel bisher aufgezogen ist, sind nicht mehr notwendig.

Zudem stützt sich die Schlingfeder in einer weiteren vorteilhaften Ausgestaltung in Umfangsrichtung, entgegengesetzt der Freilaufrichtung, während eines Nachstellvorgangs an einer Mitnahmeflanke der Führungshülse ab und verdreht die Nachstellschraube. In Rückhubrichtung, d.h. in Freilaufrichtung der Schlingfeder, sorgt der Zwischenring für die Positionierung der Schlingfeder.

In einer weiteren vorteilhaften Ausgestaltung, ist eine Verdrehsicherung eines Gewinderings, die U-förmige Erhebung der Schlingfeder und eine Nut eines Nutrings auf ein und derselben Seite der Stellspindel angeordnet, weshalb sich zugeordnete Kräftepaare ergeben. Hierdurch lassen sich Querkräfte und Quermomente auf die Nachstellteile, wie Nachstellschraube und Innenhülse der Nachstellvorrichtung, reduzieren. Zusätzlich wird der Einfluss des Spiels von der Führungshülse und dem Außendurchmesser des Gewindes auf das Lüftspiel minimiert.

Eine weitere vorteilhafte Ausgestaltung ergibt sich daraus, dass die Verdrehsicherung des Gewinderings, die U-förmige Erhebung der Schlingfeder und die Nut des Nutrings, ausgehend von der Schlingfederachse, innerhalb eines Winkelsegments von 0- 45 Grad angeordnet sind. Ein Verschieben der Stellspindel in dem Gewinde des Druckstücks wird weitgehend unterbunden, wodurch erhöhte Lüftspiele zwischen der Bremsscheibe und dem zumindest einen Bremsbelag und eine erhöhte Streuung der Lüftspiele vermieden werden.

Zudem sind die Verdrehsicherung des Gewinderings, die U-förmige Erhebung der Schlingfeder und die Nut des Nutrings in einer besonders bevorzugten Ausführungsform in einem Winkelsegment zwischen 0 Grad und 25 Grad hintereinander, auf ein und derselben Seite der Stellspindel angeordnet. Damit werden die Querkräfte und die Quermomente auf die Nachstellteile, wie der Nachstellschraube oder der Führungshülse nahezu vermieden. Das Spiel zwischen der Führungshülse und der Stellspindel tritt bezüglich Toleranzen in den Hintergrund.

Weiterhin kann die Schlingfeder zum Nachstellen des Verschleißes bei Bremsbelägen, in einer Nachstellvorrichtung für Scheibenbremse eines Fahrzeuges angeordnet sein.

Nachfolgend werden ausgewählte Ausführungsbeispiele der Erfindung anhand der beigefügten Figuren erläutert.

Es zeigt:
Fig. 1 eine erfindungsgemäße Schlingfeder in der Frontalansicht,
Fig. 2 eine Nachstellvorrichtung mit einer eingebauten Schlingfeder an einer Stellspindel,
Fig. 3 eine geschnittene Seitenansicht der Stellspindel mit Kraftflüssen der Nachstellvorrichtung,
Fig. 4 eine schematische Ansicht von Kraftflüssen der Nachstellvorrichtung,
Fig. 5 eine Teilansicht der Nachstellvorrichtung mit der Schlingfeder im Detail,
Fig. 6 eine Anordnung der Schlingfeder an der Stellspindel,
Fig. 7 eine Scheibenbremse mit einer Nachstellvorrichtung im eingebauten Zustand.

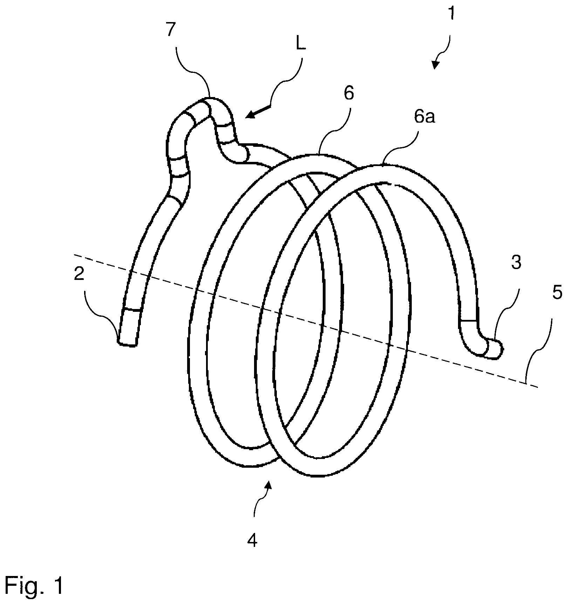

Eine Schlingfeder 1 nach Fig. 1 weist ein erstes Schlingfederende 2, ein zweites Schlingfederende 3 und einen, zwischen dem ersten Schlingfederende 2 und dem zweiten Schlingfederende 3, angeordneten Schlingfederabschnitt 4 auf. Der Schlingfederabschnitt 4 ist in zwei Schlingfederwindungen 6, 6a aufgeteilt. Das erste Schlingfederende 2 ist in Umfangsrichtung um 90 Grad weitergeführt. Damit lassen sich die Schaltwinkel einer nicht dargestellten Nachstellvorrichtung 10 gegenüber dem Stand der Technik halbieren. Die erste Schlingfederwindung 6 weist eine U-förmige Erhebung 7 auf. Eine Lasteinleitung L an der U-förmigen Erhebung 7 führt zu einem Biegemoment auf der U-förmigen Erhebung 7, welche sich unter der Last leicht verformt. Auf der, der Lasteinleitung L, gegenüberliegenden Seite der U-förmigen Erhebung 7, entstehen hierdurch radiale Kräfte, welche die weitere Verformung behindern und das Biegemoment auf der Seite der Lasteinleitung L limitieren.

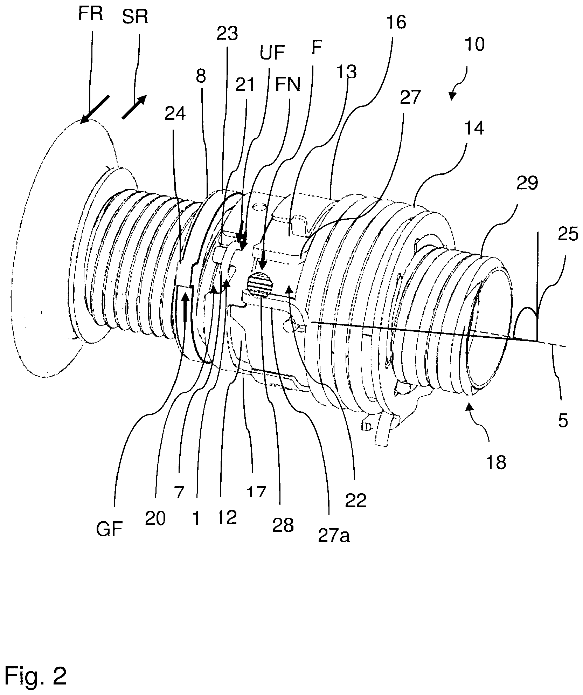

Wie die Schlingfeder 1, im eingebauten Zustand, in der Nachstellvorrichtung 10 einer Scheibenbremse angeordnet ist, zeigt Fig. 2. Die Schlingfeder 1 wird über die U-förmige Erhebung 7, was eine federvorgespannte Einhängung ist, an der Führungshülse 12 fixiert, wobei die Federvorspannung durch eine Torsionsfeder 14, über einem Nutring 13 und einem Zwischenring 17 realisiert ist. Zudem weist die Nachstellvorrichtung 10 eine Tellerfeder 8 auf, die den Gewindering 23 axial vorspannt. Die Tellerfeder 8 ist zwischen einem Druckstück 9 einer Stellspindel 18 und dem Gewindering 23, sowie unter dem Gewindering 23 angeordnet. Anschließend wird der Zwischenring 17 mit der Führungshülse 12 formschlüssig verpresst. Während des Nachstellvorgangs stützt sich die U-förmige Erhebung 7 der Schlingfeder 1 an der starren Einknüpfung der Führungshülse 12 ab und verdreht die Stellspindel 18. In Rückhubrichtung sorgt der Zwischenring 17 für die Positionierung der Schlingfeder 1. Ein Öffnungsring 16 ermöglicht die Rückstellung der Nachstellvorrichtung 10 während eines Belagwechsels insoweit, dass die Schlingfederwirkung in Sperrichtung SR, entgegengesetzt einer Freilaufrichtung FR aufgehoben wird.

Die Nachstellvorrichtung 10 weist das Prinzip der zugeordneten Kräfte auf (Actio und Reactio). Das heißt, eine Nut 22 des Nutrings 13, eine Verdrehsicherung 24 des Gewinderings 23 und die Einhängung der Schlingfeder 1 in einer Sicke 20 des Zwischenrings 17 liegen hintereinander, auf einer Seite der Nachstellvorrichtung 10, in einem Winkelsegment 25 von 0 Grad bis 45 Grad. Bezugspunkt des Winkelsegments 25 ist die Schlingfederachse 5 der Schlingfeder 1. Wirkt eine Kraft F über einen Nachstellstift 28 eines nicht gezeigten Drehhebels auf eine erste Nutflanke 27 des Nutrings 13, so wird diese über eine Mitnahmeflanke 21 der Führungshülse 12, direkt auf die Schlingfeder 1 übertragen. Der Nutring 13 weist zudem eine zweite Nutflanke 27a auf. Die Reibmomente in einem Schraubgewinde 29 der Stellspindel 18 und am Gewindering 23 sind identisch. Somit entsteht an der Verdrehsicherung 24 des Gewinderings 23 etwa 50 % der Kraft F, die an der U-förmigen Erhebung 7 der Schlingfeder 1 übergeben wurde. Die Verdrehsicherung 24 des Gewinderings 23 wirkt eine Gegenkraft FN der Verdrehsicherung 24 an der U-förmigen Erhebung 7 der Schlingfeder 1 entgegen. Eine Umfangskraft UF an der Schlingfeder 1 und eine Gegenkraft GF an der Verdrehsicherung 24 des Gewinderings 23 bilden ebenfalls ein Kräftepaar aus entgegengesetzten (ungleichen) Kräften. Hierdurch werden sämtliche "Wippen" eliminiert und das Spiel zwischen Führungshülse 12 und Stellspindel 18 tritt bezüglich Toleranzen in den Hintergrund. Das "Wippen" entsteht, wenn der Nachstellstift 28 des Drehhebels, über die Nutflanken 27, 27a, den Nutring 13 antreibt. Dann bewegt sich der Nutring 13 anfangs wie eine Wippe und nimmt erst nach Überbrückung der Spiele zwischen Nutring 13 und Führungshülse 12 die Schlingfeder 1 mit.

Wäre die Gegenkraft GF und die Kraft F an der Verdrehsicherung 24 und am Eingriffspunkt, d.h. an den Nutflanken 27, 27a des Nutrings 13, des Nachstellstifts 28 gleich groß, ergäbe sich eine virtuelle Rotationsachse zwischen dem Eingriffspunkt des Nachstellstifts 28 und der Verdrehsicherung 24 des Gewinderings 23.

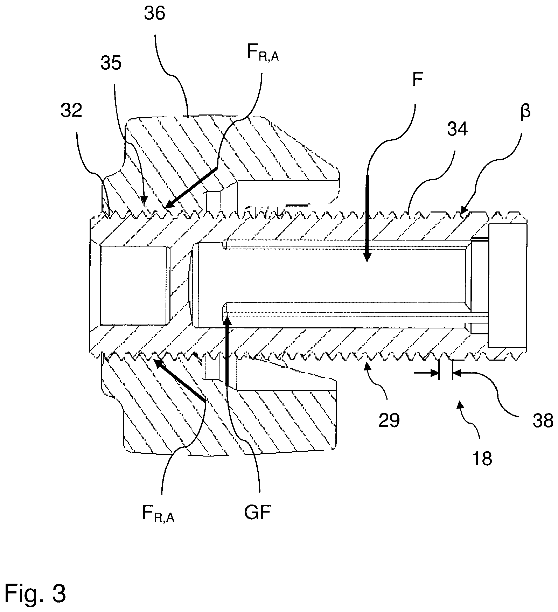

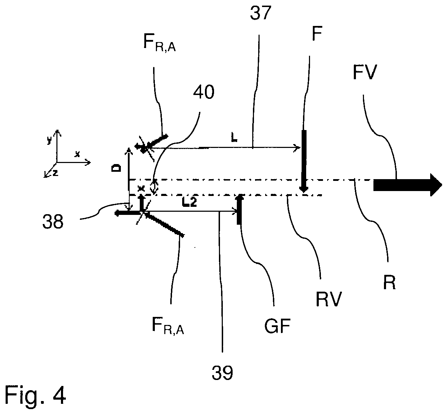

Nach Fig. 3 ist die Gegenkraft GF an der Verdrehsicherung 24 gemäß Fig. 2 und die Kraft F an dem Eingriffspunkt des Nachstellstifts 28 gemäß Fig. 2 ungleich groß. Die Verdrehsicherung 24, der Nachstellstift 28, die Tellerfeder 8 und der Gewindering 23 sind in Fig. 3 nicht gezeigt, weshalb zusätzlich auf Fig. 2 verwiesen wird. Dadurch wandert der Momentanpol in das Innere der Stellspindel 18. Als Momentenpol ist die momentane Drehachse zu verstehen. Zusätzlich liegen die Kräfte GF, F des Kräftepaars und der erste Gewindegang 32 des Schraubengewindes 29 axial nicht in einer Ebene. Hierdurch entstehen Biegemomente um die Querachse der Stellspindel 18. Wie bereits in Fig. 2 beschrieben, wird die Tellerfeder 8 axial vorgespannt. Durch die Vorspannkraft der Tellerfeder 8 am Gewindering 23 wird die Stellspindel 18 gegen das Muttergewinde 35 des Druckstücks 36 verspannt. Aufgrund eines Flankenwinkels β von 60 Grad der Flanken 34 des Schraubengewindes 29 der Stellspindel 18, entstehen am Schraubengewinde 29 Axial- und Radialkräfte F_{R}, _{A}. Die Flanken 34 des Schraubengewindes 29 weisen zudem einem Flankendurchmesser 38 auf, der in Fig. 4 näher beschrieben ist. Wie in Fig. 2 beschrieben, wird die erste Hälfte der Kraft F am Nutring 13 von der Verdrehsicherung 24 des Gewinderings 23 aufgenommen. Die Zweite Hälfte der Kraft F, die an dem Nutring 13 übergeben wurde, muss über ein Ungleichgewicht der Kräfte an den Flanken 34 des Schraubengewindes 29 aufgenommen werden.

Wie die zweite Hälfte der Kraft F am Nutring 13 nach Fig. 2 aufgenommen wird, zeigt Fig. 4. Fig. 4 zeigt schematische Ansicht der Kraftflüsse. Zum besseren Verständnis wird deshalb zusätzlich auf Fig. 2 und Fig. 3 verwiesen. Der Momentenüberschuss der Kraft F am Nutring 13 und der Gegenkraft GF an der Verdrehsicherung 24 des Gewinderings 23 wird durch ein Gegenmoment aus Vorspannkraft FV des Gewinderings 23, verbunden mit einem Offset einer Rotationsachse R, aufgefangen. Solange eine neue virtuelle Rotationsachse RV während der Verdrehung der Stellspindel 18 innerhalb der Flanken 34 des Schraubengewindes 29 bleibt, hebt der obere Teil der Flanken 34 des Schraubengewindes 29 nicht ab und die Stellspindel 18 kippt nicht. Ein Kippen der Stellspindel 18 würde sofort zu einem Leerhub am Nutring 13 führen. Die Rotationsachse R und die virtuelle Rotationsachse RV liegen mit einem Abstand 40 auseinander. Zusätzlich zentriert sich die Stellspindel 18 während der Drehbewegung selbstständig im Muttergewinde 35 des Druckstücks 36. Hierdurch wird ein Ausweichen der Stellspindel 18 in radialer Richtung vermieden. Die Kraft F an der Nut 22 des Nutrings 13 und die Kraft GF an der Verdrehsicherung 24 des Gewinderings 23 sind direkt an die Vorspannkraft FV gebunden. Darüber hinaus wird der Nutring 13 über geringe Abstützkräfte zur Führungshülse 12 stabilisiert. Steigt die Vorspannkraft FV, so steigen auch die die Kraft F des Nutrings 13 und die Kraft GF an der Verdehsicherung 24 des Gewinderings 23.

Als weiteres Merkmal ergibt sich aus Fig. 4, dass der Abstand 37 des ersten Gewindegangs 32 des Schraubengewindes 29, zur Krafteileitung am Nutring 13, zwischen dem 0 - fachen bis 1,5 - fachen des Flankendurchmessers 38 des Schraubengewindes 29 liegt. Darüber hinaus liegt der Abstand 39 des ersten Gewindegangs 32 des Schraubengewindes 29 zur Verdrehsicherung des Gewinderings 23, ebenfalls zwischen dem 0 - fachen bis 1,5 - fachen des Flankendurchmessers 38 des Schraubengewindes 29. Zudem sind in Fig. 4 die der Axial- und Radialkräfte F_{R}, _{A} gezeigt.

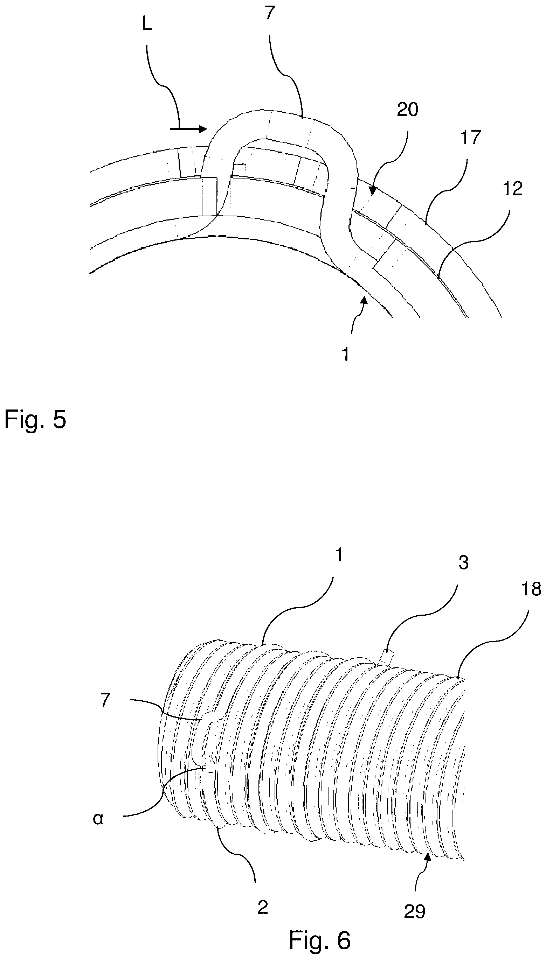

Fig. 5 zeigt noch einmal im Detail, wie die U-förmige Erhebung 7 der Schlingfeder 1 in dem Zwischenring 17 eingehängt ist. An der flächigen Lasteinleitung L müssen aufgrund der hohen Kräfte besondere Vorkehrungen getroffen werden. Eine punktförmige Lasteinleitung würde die Schlingfeder 1 lokal überlasten und zu einem vorzeitigen Ausfall führen. Um dies zu vermeiden wird die Schlingfeder 1 in Umfangsrichtung, in der Führungshülse 12, in einer dreidimensionalen Sicke 20 des Zwischenrings 17 gelagert. Dadurch wird die punktförmige Lasteinleitung in eine flächige Lasteinleitung L umgewandelt. Gleichzeitig erfolgt über die Sicke 20 die axiale Sicherung der Schlingfeder 1.

Die Anordnung der Schlingfeder 1, mit ihrem ersten Schlingfederende 2 und ihrem zweiten Schlingfederende 3, an der Stellspindel 18, ist in Fig. 6 gezeigt. Die Stellspindel 18 weist das Schraubengewinde 29 auf, wobei die Schlingfeder 1 direkt in dem Schraubengewinde 29 angeordnet ist. Das erste Schlingfederende 2 ist in Umfangsrichtung, in einem Winkel α, um 90 Grad in dem Schraubengewinde 29 weitergeführt und dient zur Fixierung der Schlingfeder 1 an der Stellspindel 18. Damit wird ein Abheben der Schlingfeder 1 an der Einspannstelle vermieden. Die Einspannstelle ist in Fig. 2 erkennbar und ist der Bereich, an dem die U-förmige Erhebung 7 an der Sicke 20 des Zwischenrings 17 gelagert ist. Der Reibungskoeffizient in dem Schraubengewinde 29 liegt zwischen 0 und 0,2.

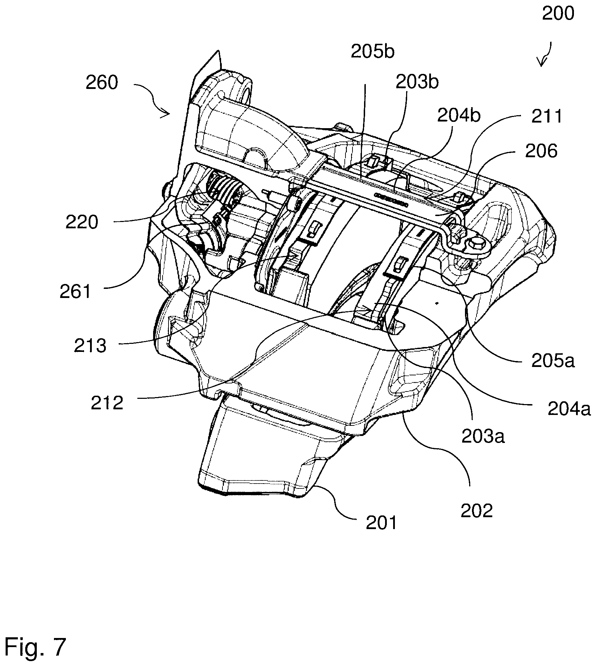

Fig. 7 zeigt eine Darstellung einer Scheibenbremse 200 für ein Nutzfahrzeug, mit einer Teilansicht einer Zuspanneinrichtung 260. Die Scheibenbremse 200 nach Fig. 7 weist einen Bremssattel 202 und einem Bremsträger 201 auf. Der Bremssattel 202 ist als Gleitsattel ausgebildet. Weiterhin weist die Scheibenbremse 200 einen ersten Belagträger 203a und einen zweiten Belagträger 203b zum Halten der Reibbeläge 204a, 204b auf. Der erste Belagträger 203a und der erste Reibbelag 204a ist als erster Bremsbelag 212 bezeichnet. Der zweite Belagträger 203b und der zweite Reibbelag 204b ist als zweiter Bremsbelag 213 bezeichnet. Ein Niederhaltesystem 211, umfassend ein erste Niederhaltefeder 205a, eine zweite Niederhaltefeder 205b und einen Niederhaltebügel 206, verhindert ein herausrutschen der Bremsbeläge 212, 213 in radialer Richtung. Über die Zuspanneinrichtung 260 werden die Bremsbeläge 212, 213 im Falle einer Bremsbetätigung an eine nicht dargestellte Bremsscheibe angelegt, d.h. zugespannt. Die Zuspanneinrichtung 260 umfasst einen Drehhebel 261 zum Zuspannen der Bremsbeläge 212, 213 und eine Nachstellvorrichtung 220 zum Einstellen des Lüftspiels zwischen der Bremsscheibe und den Bremsbelägen 212. 213.

### Bezugszeichenliste (Teil der Beschreibung)

- 1: Schlingfeder
- 2: Erstes Schlingfederende
- 3: Zweites Schlingfederende
- 4: Schlingfederabschnitt
- 5: Schlingfederachse
- 6: Erste Schlingfederwindung
- 6a: Zweite Schlingfederwindung
- 7: U-förmige Erhebung
- 8: Tellerfeder
- 9: Druckstück
- 10: Nachstellvorrichtung
- 12: Führungshülse
- 13: Nutring
- 14: Torsionsfeder
- 16: Öffnungsring
- 17: Zwischenring
- 18: Stellspindel
- 20: Sicke des Zwischenrings 17
- 21: Mitnahmeflanke der Führungshülse 12
- 22: Nut
- 23: Gewindering
- 24: Verdrehsicherung
- 25: Winkelsegment
- 27: Erste Nutflanke des Nutrings 13
- 27a: Zweite Nutflanke des Nutrings 13
- 28: Nachstellstift des Drehhebels
- 29: Schraubengewinde der Stellspindel 18
- 32: Erster Gewindegang des Schraubengewindes 29
- 34: Flanken des Schraubengewindes 29
- 35: Muttergewinde des Druckstücks 36
- 36: Druckstück
- 37: Abstand des ersten Gewindegangs 32 des Schraubengewindes 29
- 38: Flankendurchmesser
- 39: Zweiter Abstand des Gewindegangs 32 des Schraubengewindes 29
- 40: Abstand zwischen der Rotationsachse R und der virtuellen Rotationsachse RV
- α: Winkel Alpha
- β: Flankenwinkel des Schraubengewindes 29
- L: Lasteinleitung
- F: Kraft
- UF: Umfangskraft
- FR: Freilaufrichtung
- SR: Sperrrichtung
- GF: Gegenkraft
- F_{R,A}: Axial- und Radialkraft
- FN: Gegenkraft der Verdrehsicherung 24
- FV: Vorspannkraft
- R: Rotationsachse
- RV: virtuelle Rotationsachse

### Bezugszeichenliste für eine Scheibenbremse nach Fig. 7

- 200: Scheibenbremse
- 201: Bremsträger
- 202: Bremssattel
- 203a: erster Belagträger
- 203b: zweiter Belagträger
- 204a: erster Reibbelag
- 204b: zweiter Reibbelag
- 205a: erste Niederhaltefeder
- 205b: zweite Niederhaltefeder
- 206: Niederhaltebügel
- 211: Niederhaltesystem
- 212: erster Bremsbelag
- 213: zweiter Bremsbelag
- 220: Nachstellvorrichtung
- 260: Zuspanneinrichtung
- 261: Drehhebe

## Patentansprüche

1. Nachstellvorrichtung (10), zum Nachstellen des Verschleißes von Bremsbelägen einer Scheibenbremse, wobei die Nachstellvorrichtung (10)
a) eine Führungshülse (12), in der eine Schlingfeder (1) angeordnet ist,
b) ein Nutring (13) mit einer Nut (22), der die Führungshülse (12) umgreift, wobei der Nutring (13) über eine Torsionsfeder (14) mit einer Tellerfeder (8) gekoppelt ist,
c) ein, den Nutring (13), umgreifenden Öffnungsring (16),
d) ein Zwischenring (17) zur Überwindung des Lüftspiels zwischen der Führungshülse (12) und der Schlingfeder (1) und
e) ein Gewindering (22) mit einer Verdrehsicherung (23) umfasst, wobei die Nachstellvorrichtung (10) axial über eine drehbare Stellspindel (18) der Scheibenbremse geschoben ist und die Stellspindel (18) ein Schraubengewinde (29) aufweist, **dadurch gekennzeichnet, dass** die Schlingfeder (1) ein erstes Schlingfederende (2) und ein zweites Schlingfederende (3), mit einem, zwischen dem ersten Schlingfederende (2) und dem zweiten Schlingfederende (3) angeordneten Schlingfederabschnitt (4) aufweist und der Schlingfederabschnitt (4) sich axial um eine Schlingfederachse (5) erstreckt und mindestens eine Schlingfederwindung (6, 6a) aufweist, wobei die Schlingfeder (1) mindestens eine U-förmige Erhebung (7) aufweist und mit der U-förmigen Erhebung (7) an einer Sicke (20) des Zwischenrings (17) angeordnet ist.

2. Nachstellvorrichtung (10), zum Nachstellen des Verschleißes von Bremsbelägen einer Scheibenbremse nach Anspruch 1, **dadurch gekennzeichnet, dass** die Schlingfeder (1) in dem Schraubengewinde (29) der Stellspindel (18) angeordnet ist.

3. Nachstellvorrichtung (10), zum Nachstellen des Verschleißes von Bremsbelägen einer Scheibenbremse nach Anspruch 1 oder 2, **dadurch gekennzeichnet, dass** sich die Schlingfeder (1), in Sperrichtung (SR), entgegengesetzt der Freilaufrichtung (FR), während eines Nachstellvorgangs, an einem Vorsprung (21) der Führungshülse (12) abstützt.

4. Nachstellvorrichtung (10), zum Nachstellen des Verschleißes von Bremsbelägen einer Scheibenbremse nach einem der Ansprüche 1 bis 3, **dadurch gekennzeichnet, dass** die Verdrehsicherung (24) des Gewinderings (23), die U-förmige Erhebung (7) der Schlingfeder (1) und die Nut (22) des Nutrings (13), auf ein und derselben Seite der Stellspindel (18) angeordnet sind.

5. Nachstellvorrichtung (10), zum Nachstellen des Verschleißes von Bremsbelägen einer Scheibenbremse nach Anspruch 4, **dadurch gekennzeichnet, dass** die Verdrehsicherung (24) des Gewinderings (23), die U-förmige Erhebung (7) der Schlingfeder (1) und die Nut (22) des Nutrings (13), ausgehend von der Schlingfederachse (5), innerhalb eines Winkelsegments (25) von 0 Grad bis 45 Grad oder von 0 Grad bis 25 Grad angeordnet sind.

6. Scheibenbremse für ein Fahrzeug, **dadurch gekennzeichnet, dass** Scheibenbremse eine Nachstellvorrichtung (10) nach einem der Ansprüche 1 bis 5aufweist.

## Claims

1. An adjustment device (10) for adjusting the wear of brake pads of a disc brake, the adjustment device (10) comprising
a) a guide sleeve (12) in which a wrap spring (1) is arranged,
b) a grooved ring (13) having a groove (22) which engages around the guide sleeve (12), the grooved ring (13) being coupled to a disc spring (8) via a torsion spring (14),
c) an opening ring (16) engaging around the grooved ring (13),
d) an intermediate ring (17) for overcoming the clearance between the guide sleeve (12) and the wrap spring (1), and
e) a threaded ring (22) having an anti-rotation mechanism (23),
the adjustment device (10) being pushed axially over a rotatable actuating spindle (18) of the disc brake and the actuating spindle (18) having a screw thread (29), **characterized in that** the wrap spring (1) has a first wrap spring end (2) and a second wrap spring end (3), having a wrap spring portion (4) arranged between the first wrap spring end (2) and the second wrap spring end (3), and the wrap spring portion (4) extends axially around a wrap spring axis (5) and has at least one wrap spring winding (6, 6a), the wrap spring (1) having at least one U-shaped protrusion (7) and being arranged with the U-shaped protrusion (7) on a bead (20) of the intermediate ring (17).

2. The adjustment device (10) for adjusting the wear of brake pads of a disc brake according to claim 1, **characterized in that** the wrap spring (1) is arranged in the screw thread (29) of the actuating spindle (18).

3. The adjustment device (10) for adjusting the wear of brake pads of a disc brake according to claim 1 or 2, **characterized in that,** during an adjustment process, the wrap spring (1) is supported in a blocking direction (SR), counter to the freewheeling direction (FR), on a projection (21) of the guide sleeve (12).

4. The adjustment device (10) for adjusting the wear of brake pads of a disc brake according to any of claims 1 to 3, **characterized in that** the anti-rotation mechanism (24) of the threaded ring (23), the U-shaped protrusion (7) of the wrap spring (1) and the groove (22) of the grooved ring (13) are arranged on the same side of the actuating spindle (18).

5. The adjustment device (10) for adjusting the wear of brake pads of a disc brake according to claim 4, **characterized in that** the anti-rotation mechanism (24) of the threaded ring (23), the U-shaped protrusion (7) of the wrap spring (1) and the groove (22) of the grooved ring (13) are arranged, starting from the wrap spring axis (5), within an angular segment (25) of from 0 degrees to 45 degrees or from 0 degrees to 25 degrees.

6. A disc brake for a vehicle, **characterized in that** the disc brake comprises an adjustment device (10) according to any of claims 1 to 5.

## Revendications

1. Dispositif de rattrapage (10) permettant de rattraper l'usure de garnitures de frein d'un frein à disque, le dispositif de rattrapage (10) comprenant
a) une douille de guidage (12) dans laquelle est disposé un ressort enroulé (1),
b) une bague rainurée (13) comportant une rainure (22) qui entoure la douille de guidage (12), la bague rainurée (13) étant couplée à un ressort Belleville (8) par l'intermédiaire d'un ressort de torsion (14),
c) une bague d'ouverture (16) entourant la bague rainurée (13),
d) une bague intermédiaire (17) permettant de dépasser le jeu entre la douille de guidage (12) et le ressort enroulé (1) et
e) une bague filetée (22) comportant un blocage anti-rotation (23),
dans lequel le dispositif de rattrapage (10) est poussé axialement par l'intermédiaire d'une broche de réglage (18) rotative du frein à disque et la broche de réglage (18) présente un filetage de vis (29), **caractérisé en ce que** le ressort enroulé (1) présente une première extrémité de ressort enroulé (2) et une seconde extrémité de ressort enroulé (3) avec une section de ressort enroulé (4) disposée entre la première extrémité de ressort enroulé (2) et la seconde extrémité de ressort enroulé (3), et la section de ressort enroulé (4) s'étend axialement autour d'un axe de ressort enroulé (5) et présente au moins une spire de ressort enroulé (6, 6a), le ressort enroulé (1) présentant au moins une élévation en forme de U (7) et étant disposé avec l'élévation en forme de U (7) sur une moulure (20) de la bague intermédiaire (17).

2. Dispositif de rattrapage (10) permettant de rattraper l'usure de garnitures de frein d'un frein à disque selon la revendication 1, **caractérisé en ce que** le ressort enroulé (1) est disposé dans le filetage de vis (29) de la broche de réglage (18).

3. Dispositif de rattrapage (10) permettant de rattraper l'usure de garnitures de frein d'un frein à disque selon la revendication 1 ou 2, **caractérisé en ce que** le ressort enroulé (1) s'appuie sur une saillie (21) de la douille de guidage (12) dans une direction de blocage (SR) à l'encontre de la direction de roue libre (FR) pendant un processus de rattrapage.

4. Dispositif de rattrapage (10) permettant de rattraper l'usure de garnitures de frein d'un frein à disque selon l'une des revendications 1 à 3, **caractérisé en ce que** le blocage anti-rotation (24) de la bague filetée (23), l'élévation en forme de U (7) du ressort enroulé (1) et la rainure (22) de la bague rainurée (13) sont disposés sur un même côté de la broche de réglage (18).

5. Dispositif de rattrapage (10) permettant de rattraper l'usure de garnitures de frein d'un frein à disque selon la revendication 4, **caractérisé en ce que** le blocage anti-rotation (24) de la bague filetée (23), l'élévation en forme de U (7) du ressort enroulé (1) et la rainure (22) de la bague rainurée (13) sont disposés à l'intérieur d'un segment angulaire (25) de 0 degré à 45 degrés ou de 0 degré à 25 degrés à partir de l'axe de ressort enroulé (5).

6. Frein à disque pour un véhicule, **caractérisé en ce que** le frein à disque présente un dispositif de rattrapage (10) selon l'une des revendications 1 à 5.
